# EUROPÄISCHE PATENTSCHRIFT

(11) **EP 0 446 174 B1**
(45) Veröffentlichungstag und Bekanntmachung des Hinweises auf die Patenterteilung: **22.04.1998**
(21) Anmeldenummer: 91810133.8
(22) Anmeldetag: 28.02.1991
(51) Int. Cl.: C08K 13/02

(54) **Verfahren zur Herstellung eines Stabilisators für halogenhaltige Polymere**
Method for the preparation of a stabilizer for halogen-containing polymers
Méthode pour la préparation d'un stabilisateur pour polymères contenant du chlore

(30) Priorität: 09.03.1990 CH 763/90
(43) Veröffentlichungstag der Anmeldung: 11.09.1991
(73) Patentinhaber: Ciba Specialty Chemicals Holding Inc., 4057 Basel (CH)
(72) Erfinder: Abeler, Gerd, Dr., W-6100 Darmstadt (DE); Fuchs, Reiner, Dr., W-6105 Ober-Ramstadt (DE); Malzacher, Kornelia, W-6145 Lindenfels (DE)

(56) Entgegenhaltungen:
- FR-A- 2 177 727
- WORLD PATENTS INDEX LATEST Week 9007, Derwent Publications Ltd., London, GB; AN 90-048262
- WORLD PATENTS INDEX Week 8022, Derwent Publications Ltd., London, GB; AN 80-39381C

## Beschreibung

Die Erfindung betrifft ein Verfahren zur Herstellung eines Stabilisators für halogenhaltige Polymere, einen Stabilisator hergestellt nach diesem Verfahren und die Verwendung dieses Stabilisators zur Stabilisierung von halogenhaltigen Polymeren.

Aus der DE-A 22 09 022 ist ein Verfahren zum Stabilisieren von halogenhaltigen Polymerisaten bekannt. Den Polymerisaten wird ein vorvermischtes Produkt aus einem Stabilisator und einem synthetischen Silikatpulver zugegeben, wobei der eingesetzte Stabilisator beispielsweise eine Organometall-Schwefelverbindung oder ein Metallcarboxylat sein kann.

Aus der NL-A 78/11 090 ist ein granulatförmiges Additiv für Hart-PVC, enthaltend einen flüssigen OrganozinnStabilisator, der auf ein feinstteiliges anorganisches Adsorbens aufgebracht ist, bekannt. Bevorzugter Träger ist Si0₂ und das Additiv enthält neben der Organozinn-Verbindung ein stabilisierendes Gleitmittel, ein Gleitmittel und optische Aufheller, Pigmente etc.

In der JP-A 50-109 943 wird als Wärmestabilisator eine Pulver- oder Granulat-Zusammensetzung beschrieben, die kolloidales Siliciumoxid, neben beispielsweise Dioctylzinn-bis-(3-mercaptopropionat) enthält. Dieser Stabilisator hat ein gutes Fliessverhalten und dispergiert leicht in PVC

Aus der JP-A 50-109 942 ist eine Mischung von flüssigem Dioctylzinn-bis-(isooctylthioglykolat) und fein gepulvertem Siliciumoxid als Stabilisator für PVC bekannt.

Der JP-A 52-004 296 ist zu entnehmen, dass ein Stabilisator für PVC aus einer bei Raumtemperatur festen Metallseife, einer flüssigen Komponente, beispielsweise Di-n-octylzinn-isooctylthioglykolat und weiteren Stoffen und Siliciumoxid-Teilchen durch Granulieren in einem Hochgeschwindigkeits-Rührwerk hergestellt werden kann.

Weitere Stabilisatoren, enthaltend eine Organozinnkomponente und ein pulverförmiges oder feinteiliges Trägermaterial sind beispielsweise aus der US-A 4,681,632, der JP-A 61-272 258 und JP-A 55-043 144 bekannt.

Die Herstellung dieser bekannten Stabilisatorgemische ist aufwendig, insbesondere dadurch, dass beispielsweise die Organozinnverbindungen in einem separaten Verfahrensschritt hergestellt werden müssen, wobei Lösungsmittel zum Einsatz gelangen, die abgetrennt und entsorgt oder wiederaufbereitet werden müssen. Eine weitere Erschwernis ist die homogene Verteilung beispielsweise solcher Organozinnverbindungen in den Trägern, wie z.B. feinstteiligem Siliciumoxid.

Aufgabe vorliegender Erfindung gemäß Ansprüchen 1-14 ist es, ein Verfahren zur Verfügung zu stellen, bei dem die bekannten Nachteile nicht auftreten.

Erfindungsgemäss wird das dadurch erreicht, dass wenigstens eine Carbonsäure oder ein Carbonsäureanhydrid, wenigstens ein Organozinnoxid und wenigstens ein Adsorbens ohne Zusatz von Lösungsmittel vermischt und erhitzt werden

Zweckmässig ist ein Verfahren, bei dem als Carbonsäurekomponente Verbindungen der Formel 1 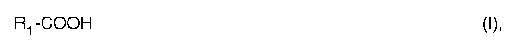 worin R₁ -H, Alkyl mit 1 bis 18 C-Atomen, Alkenyl mit 2 bis 18 C-Atomen, einen Rest -COOH, -R₂-COOH, wobei R₂-CH=CH-, Alkylen mit 1 bis 4 C-Atomen, Phenylen oder mit C₁-C₄-Alkyl substituiertes Phenylen, oder -CH₂-CH(OH)-ist, oder R₁ einen Rest -CH(XH)-CH₃, wobei X = O oder S ist, darstellt, oder R₁ einen Rest -CR₃R₄-(CR₅R₆)ₙ-SH, wobei R₃, R₄, R₅ und R₆ unabhängig voneinander -H oder Alkyl mit 1 bis 6 C-Atomen und n 0 oder 1 ist, darstellt, oder R₁ einen Rest 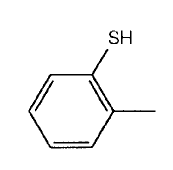 darstellt, oder R₁ Phenyl oder durch C₁-C₆-Alkyl oder/und OH substituiertes Phenyl oder Phenyl-C₁-C₄-alkyl oder im Phenylteil durch C₁-C₆-Alkyl oder/und OH substituiertes Phenyl-C₁-C₄-alkyl darstellt, oder deren Anhydride eingesetzt werden

Bevorzugt ist ein Verfahren, bei dem als Carbonsäurekomponente Verbindungen der Formel 1, wie beschrieben, worin R₁ Alkyl mit 12 bis 18 C-Atomen darstellt oder worin R₁ einen Rest -COOH, -R₂-COOH, wobei R₂ -CH=CH-, Alkylen mit 1 bis 4 C-Atomen, -CH₂-CH(OH)- ist, darstellt, oder worin R₁ einen Rest -CH(SH)-CH₃ oder -CH(OH)-CH₃ darstellt, oder R₁ einen Rest -CH₂-SH oder -CH₂-CH₂-SH darstellt oder R₁ einen Rest 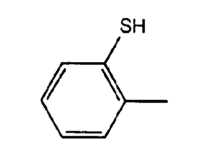 darstellt, oder
deren Anhydride eingesetzt werden.

Von grossem praktischen Interesse sind beispielsweise als Carbonsäuren die Maleinsäure, die Fumarsäure, die ß-Mercaptopropionsäure, die Thiomilchsäure, die Thioglykolsäure, die Thiosalicylsäure, die Laurinsäure, die Palmitinsäure oder die Stearinsäure.

Besonders bevorzugt ist ein Verfahren, bei dem als Carbonsäure oder Anhydrid Thioglykolsäure, 3-Mercaptopropionsäure, Thiosalicylsäure, Maleinsäure, Maleinsäureanhydrid oder Mischungen davon eingesetzt wird.

Bedeutet in Formel I R₂ Phenylen, so ist o-Phenylen bevorzugt. Phenyl oder Phenylalkyl als R₁ enthält, wenn substituiert, vorzugsweise 1-3 Substituenten. Beispiele sind dafür Gruppen der Formel 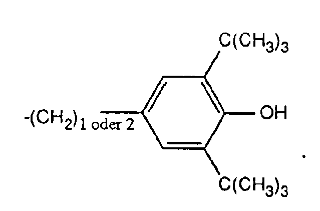 In Formel sind ferner R₄-R₆ vorzugsweise H oder CH₃, insbesondere H.

Zweckmässig ist ein Verfahren, bei dem als Organozinnoxid eine Verbindung der Formel II 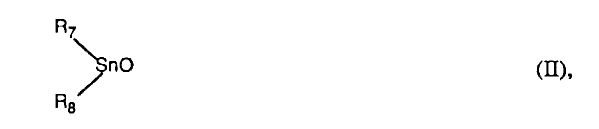 worin R₇ und R₈, unabhängig voneinander, C₁-C₂₀-Alkyl, C₆-C₂₀-Alkoxycarbonylalkyl, C₇-C₉-Aralkyl, Phenyl oder C₁-C₄-Alkyl substituiertes Phenyl darstellt, eingesetzt wird.

Bevorzugt ist ein Verfahren, bei dem als Organozinnoxid eine Verbindung der Formel II, wie beschrieben, worin R₇ und R₈ Alkyl mit 1 bis 18 C-Atomen darstellt, eingesetzt wird.

Besonders bevorzugt ist ein Verfahren, bei dem als Organozinnoxid eine Verbindung der Formel 11, wie beschrieben, worin R₇ und R_{B} Alkyl mit 4 bis 12 C-Atomen darstellt, angewendet wird.

Bevorzugt sind R₇ und R₈ gleich.

Ganz besonders bevorzugt sind Dibutylzinnoxid, Dioctylzinnoxid und Dilaurylzinnoxid.

Von den beiden Ausgangsprodukten Organozinnoxid und Carbonsäure bzw Carbonsäureanhydrid ist vorzugsweise mindestens eine bei Raumtemperatur flüssig.

Zweckmässig ist ein Verfahren, bei dem als Adsorbens wenigstens eine Substanz aus der Reihe der Kieselsäuren, des Kieselgurs, des Kieselgels, der Silikate, der Bleicherden oder der aktivierten Aluminiumoxide angewendet wird. Ferner kann als Adsorbens auch ein teilchenförmiges organisches Polymer, z.B. auf Basis von Melamin/Formaldehyd-und Harnstoff/Formaldehyd-Polymerisaten, eingesetzt werden. Bevorzugt werden mineralische Adsorbentien verwendet Als Silikate sind z.B. auch Alumosilicate wie etwa Zeolithe hervorzuheben.

Die zur Anwendung gelangenden Kieselgele sind an sich bekannt und es können beispielsweise Handelsqualitäten angewendet werden. Besonders geeignet sind beispielsweise Kieselgele mit Schüttdichten von 0,4 bis 0,8 g/ml, wobei Schüttdichten von 0,4 bis 0,5 g/ml besonders bevorzugt sind

Als Kieselgur können beispielsweise Handelsprodukte eingesetzt werden, wobei Litergewichte von 150-300 g zweckmässig sind.

Bei den Silikaten handelt es sich beispielsweise un die Salze und Ester der Orthokieselsäure.

Besondere praktische Bedeutung haben die Erdalkalimetallsalze und insbesondere die Ca- und Mg-Salze der Orthokieselsäure.

Weitere geeignete Adsorbentien sind die Bleicherden, demnach beispielsweise kolloide, feinstverteilte, wasserhaltige Aluminium- und/oder Magnesiumsilikate aus der Montmorillonitgruppe. Bekannt sind derartige Stoffe beispielsweise auch unter den Namen Fullererde, Floridaerde, Attapulgit oder Bentonit. Zu den genannten Adsorbentien gehören die Aluminiumoxide, wobei hochdisperse Formen und dabei das y-Aluminiumoxid besonders bevorzugt sind.

Die genannten Polymerisate sind zum Teil im Handel erhältlich (z.B. UF-Polymere, OPergopak).

Von grossem praktischem Wert sind die an sich bekannten Kieselsäuren, wobei besonders bevorzugt die pulverförmigen, voluminösen Formen der Kieselsäure, die sogenannten Fällungs-Kieselsäuren eingesetzt werden können. Derartige Fällungs-Kieselsäuren weisen beispielsweise ein Porenvolumen von 2,5-15 ml/g und eine spezifische Oberfläche von 50-500 m²/g auf. Bevorzugt sind auch die pyrogenen oder Gasphasen-Kieselsäuren.

Das Adsorbens kann gegebenenfalls weitere Oxide enthalten, wobei beispielsweise die Alkalioxide oder Erdalkalioxide oder die Oxide der Metalle Al, Ti, Zr, Fe, Co oder Ni zu nennen sind.

Die Alkalioxide sind z.B. das Li0₂, Na₂0, K₂0 oder C_{S2}0, wobei Na₂0 und K₂0 bevorzugt sind.

Die Erdalkalioxide sind z.B. das MgO, CaO, SrO oder BaO, wobei MgO und CaO bevorzugt sind. Die Oxide der Metalle Ti und Fe sind ebenfalls bevorzugt.

Das Adsorbens kann auch Gemische von genannten Oxiden enthalten.

Beispielsweise kann CaO in Mengen bis zu 30 Gew.-%, vorzugsweise 1 bis 30 Gew.-%, AI₂0₃ in Mengen bis zu 5 Gew.-%, vorzugsweise 1 bis 5 Gew.-%, Fe₂0₃ in Mengen bis zu 2 Gew.-%, vorzugsweise 1 bis 2 Gew.-%, MgO in Mengen bis zu 20 Gew.-%, vorzugsweise 0,1 bis 20 Gew.-%oderAlkalioxide in Mengen bis zu 2 Gew.-%, vorzugsweise 1 bis 2 Gew.-% und besonders bevorzugt Na₂0 und K₂0 in Mengen von 1 bis 2 Gew.-%, jeweils bezogen auf das Adsorbens, enthalten sein.

In zweckmässiger Ausführungsform ist das erfindungsgemässe Verfahren dadurch gekennzeichnet, dass die Carbonsäure oder Carbonsäureanhydrid und das Organozinnoxid in dem Masse mit dem Adsorbens vermischt werden, dass das Gemisch immer rieselfähig bleibt.

Das Verfahren kann beispielsweise derart ausgeführt werden, für den Fall flüssiger Carbonsäuren der Formel 1, wie vorbeschrieben, dass die flüssige Säure auf das Adsorbens aufgebracht wird, so dass das Gemisch rieselfähig bleibt. Das so vorbehandelte Adsorbens kann anschliessend mit dem Organozinnoxid vermischt und beispielsweise im Vakuum erhitzt werden. Die Temperatur liegt zweckmässig unterhalb des Schmelzpunktes der entstehenden Organozinnverbindung. Im Falle der Verwendung fester Carbonsäuren der Formel 1 wird sinngemäss, wie beschrieben, verfahren, mit dem Unterschied, dass Adsorbens, Carbonsäure und Organozinnoxid vor dem Erhitzen zweckmässig gründlich vermischt werden.

Der Mischprozess und die Reaktion laufen in beiden genannten Fällen simultan ab, wobei die Reaktion in verschiedenen Vorrichtungen ausgeführt werden kann. Beispielsweise können Mischer als Reaktionsapparate dienen. Beispiele für solche Mischer sind Behälter mit Rührer, Freifallmischer, Mischer mit zwangsweisem Mischvorgang, V-Mischer, Eirich-Mischer, Pflugschar-Mischer, Pflugschaufel-Mischer, Paddelmischer, Zentrifugalmischer, Mischschnecken, Umlaufschneckenmischer oder Durchlaufmischer. Besonders bevorzugt sind Mischer, die beheizbar und/ oder evakuierbar sind.

Die Reaktion wird bevorzugt in Trocknern, die ebenfalls zweckmässig beheizbar und/oder evakuierbar sind, durchgeführt. Solche Trockner sind an sich bekannt und es kann sich z.B. um Schaufeltrockner, Traumeltrockner, Muldentrockner, Schneckentrockner, Vakuumtellertrockner oder Vakuumdrehtrommeln handeln.

Die einzelnen Komponenten, wie das Adsorbens, die Carbonsäure und das Organozinnoxid werden entsprechend der zur Anwendung gelangenden Vorrichtung auf die zugehörige Weise in den Reaktionsbehälter, demnach den Mischbehälter oder Trocknerbehälter eingegeben. Flüssige Komponenten werden zweckmässig durch geeignete Vorrichtungen auf das Adsorbens aufgesprüht.

Die erfindungsgemässe Umsetzung findet bei erhöhter Temperatur statt. Diese liegt beispielsweise im Bereich von 40-120°C, vorzugsweise 40-100°C, insbesondere 50-100°C, vor allem 50-80°C, z.B. 60-80°C. Das Anlegen von Vakuum ist bevorzugt. Dieses liegt beispielsweise im Bereich von 1 bis 500, vorzugsweise 1 bis 200, insbesondere 5 bis 200, vor allem 10 bis 100 mbar.

Als Reaktionsprodukt entsteht Wasser, das durch den Trocknungsprozess entfernt wird. Durch das zweckmässig an den Reaktionsbehälter angelegte Vakuum wird die Temperatur des Trocknungsprozesses entsprechend erniedrigt und somit die Stabilisatoren schonend behandelt. Vorzugsweise werden bei den Verfahren die Carbonsäure oder das Carbonsäureanhydrid, das Organozinnoxid und das Adsorbens bei Normaldruck auf Temperaturen bis zu 120°C oder im Vakuum bis zu 100°C erhitzt.

Die erfindungsgemäss auf dem Adsorbens gebildeten Organozinnstabilisatoren sind an sich bekannt. Beispielsweise erhält man bei Verwendung der Edukte der Formeln 1 und 11 Verbindungen der Formeln R₇R₈Sn(OOCR₁)₂ (im Falle R1 einwertiger Rest) bzw. 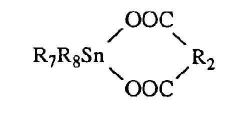 bzw. R₇R₈Sn-OOC-R₂-COO-SnR₇R₈ (jeweils im Falle von R₂ = zweiwertiger Rest, wobei im Fall R₁ = -COOH R₂ = direkte Bindung; welche Verbindung gebildet wird, hängt vom stöchiometrischen Verhältnis der Ausgangsverbindungen ab). Selbstverständlich können auch Gemische von Organozinnverbindungen entstehen.

Die Menge des zu verwendenden Adsorbens kann beispielsweise 5 bis 95 Gew.-% bezogen auf das Stabilisatorreaktionsprodukt ausmachen, zweckmässig sind 5 bis 50 Gew-% und bevorzugt 10 bis 20 Gew.-%.

Beispiele bevorzugter erfindungsgemäss erhältlicher Stabilisatoren sind:
Dibutylzinn-ß-mercaptopropionat mit 10-15 Gew.-% gefällter Kieselsäure,
Dioctylzinn-ß-mercapiopropionat mit 10-15 Gew.-% gefällter Kieselsäure,
Dibutylzinnmaleat mit 10 Gew.-% gefällter Kieselsäure,
Dioctylzinnmaleat mit 10 Gew.-% gefällter Kieselsäure.

Wird als Adsorbens gefällte Kieselsäure angewendet, so beträgt der Anteil des Adsorbens im Stabilisatorgemisch zweckmässig 5 bis 20 Gew.-%, vorzugsweise 10 bis 15 Gew.-% und besonders bevorzugt 10 Gew.-%.

Die Carbonsäure oder das Carbonsäureanhydrid wird beispielsweise in 0,95 bis 1,05facher äquivalenter Menge, bezogen auf die Organozinnverbindung, angewendet Zweckmässig zielt man auf äquivalente Mengen ab.

Die erfindungsgemässen Stabilisatoren eignen sich zum Stabilisieren von chlorhaltigen Polymerisaten, beispielsweise für folgende Typen von Polymeren:
Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methacrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenechlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Gummis chlorierte Polymere des Ethylens; Polymere und nachchlorierte Polymere von Chlorbutadien und deren Copolymere mit Vinylchlorid, Gummi-Hydrochlorid und chloriertes Gummi-Hydrochlorid; sowie Mischungen der genannten Polymere unter sich oder mit anderen polymerisierbaren Verbindungen, eingesetzt werden.

Ferner sind umfasst die Pfropfpolymerisate von PVC mit EVA, ABS und MBS. Bevorzugte Substrate sind auch Mischungen der vorstehend genannten Homo- und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM, Polylactonen und Nitrilkautschuk.

Weiterhin bevorzugt sind Suspensions- und Massepolymere, sowie Emulsionspolymere.

Als chlorhaltiges Polymerisat ist Polyvinylchlorid besonders bevorzugt, insbesondere Suspensionspolymerisate, Emulsionspolymerisate und Massepolymerisate.

Den erfindungsgemäss erhaltenen Stabilisatoren können weitere als Stabilisatoren für chlorhaltige Polymerisate bekannte Substanzen beigemischt werden, um allenfalls eine weiter verbesserte Wirkung zu erzielen. Derartige weitere Stabilisatoren können auch den erfindungsgemässen stabilisierten chlorhaltigen Polymerzusammensetzungen gesondert zugesetzt werden.

Im erfindungsgemässen Verfahren selbst kann aber auch mindestens ein weiterer Stabilisator, insbesondere ein phenolisches Antioxidans, zugesetzt werden Die nach dem erfindungsgemässen Verfahren erhältlichen pulverförmigen Stabilisatorgemische enthalten dann selbst einen oder mehrere solcher Stabilisatoren inkorporiert.

Beispiele für derartige zusätzliche Stabilisatoren, die in erfindungsgemässen Stabilisatoren enthalten sind oder/ und den chlorhaltigen Polymerisaten getrennt zugegeben werden können, sind die folgenden:

### 1. Antioxidantien

1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(a-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.

1.2. Alkylierte Hydrochinone, z.B. 2,6-Di-tert.butyl-4-methoxyphenol, 2,5-Di-tert.butyl-hydrochinon, 2,5-Di-tert. amyl-hydrochinon, 2,6-Diphenyl-4-octadecyloxyphenol.

1.3. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).

1.4. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(a-methylbenzyl)-4-nonylphenol], 2,2'-Methylen-bis-[6-(α,α-di-methylbenzyl)-4-nonylphenol], 4,4'-Methylen-bis-(2,6-di-tert.-butylphenol), 4,4'-Methylen-bis-(6-tert.butyl-2-methylphenol), 1,1 -Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1 -Bis-(5-tert.butyl-4-hydroxy-2-methyl-phenyl)-3-n-dodecylmercaptobutan, Ethylenglycol-bis-[3,3-bis-(3'-tert.-butyl-4'-hydroxyphenyl)-butyrat], Bis-(3-tert.butyl-4-hydroxy-5-methyl-phenyl)-dicyclopentadien, Bis-[2-(3'-tert.butyl-2'-hydroxy-5'-methyl-benzyl)-6-tert.butyl-4-methyl-phenyl]-terephthalat.

1.5 Benzylverbindungen, z.B. 1,3,5-Tris-(3,5-di-tert.butyl-4-hydroxy-benzyl)-2,4,6-tri-methylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure- dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

1.6. Acylaminophenole, z.B. 4-Hydroxy-laurinsäureanilid, 4-Hydroxystearinsäureanilid, 2,4-Bis-(octylmercapto)-6-(3,5-di-tert.butyl-4-hydroxyanilino)-s-triazin, N-(3,5-di-tert.-butyl-4-hydroxyphenyl)-carbaminsäureoctylester.

1.7. Ester der β-(3,5-Di-tert.butyl-4-hydroxyphenyl)-pronionsäure mit ein- oder mehrwertigen Alkoholen, wie z.B. mit Methanol, Octa- decanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.

1.8. Ester der β-(5-tert.Butyl-4-hydroxy-3-methylphenyl)-propionsäure mit ein- oder mehrwertigen Alkoholen, wie z. B mit Methanol, Octadecanol, 1,6-Hexandiol, Neopentylglycol, Thiodiethylenglycol, Diethylenglycol, Triethylenglycol, Pentaerythrit Tris-(hydroxy)ethyl-isocyanurat, N,N'-Bis-(hydroxyethyl)-oxalsäurediamid.

1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.

1.10. Amide der β-(3,5-Di-tert.butyl-4-hydroxyphenyl)-pronionsäure, wie z.B. N, N'-Bis-(3,5-di-tert.butyl-4-hydroxy- phenylpropionyl)-hexamethylendiamin, N,N'-Bis-(3,5-di-tert.-butyl-4-hydroxyphenylpropionyl)-trimethylendiamin, N, N'-Bis-(3,5-di-tert.butyl-4-hydroxyphenylpropionyl)-hydrazin.

### 2. UV-Absorber und Lichtschutzmittel

2.1. 2-(2'-Hydroxyphenyl)-benztriazole, wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5,Chlor-3'-tert.-butyl-5'-methyl-, 3'-sec.Butyl-5'-tert.butyl, 4'-Octoxy-, 3',5'-Di-tert.amyl-, 3',5'-Bis-(a,a-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.-butylphenylester, 3,5-Di-tert.butyl-4-hydroxybenzoesäurehexadecylester.

2.4. Acrylate, wie z.B. α-Cyan-β,β-diphenylacrylsäure-ethylester bzw. -isooctylester, a-Carbomethoxy-zimtsäuremethylester, a-Cyano-ß-methyl-p-methoxy-zimtsäuremethylester bzw. -butylester, a-Carbomethoxy-p-methoxy-zimtsäure-methylester, N-(ß-Carbomethoxy-ß-cyanovinyl)-2-methyl-indolin.

2.5. Nickelverbindunqen, wie z.B Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure- monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl4-lauroyl-5-hydroxy-pyrazols, gegebenenfalls mit zusätzlichen Liganden.

2.6. Oxalsäurediamide, wie z.B. 4,4'-Di-octyloxy-oxanilid, 2,2'-Di-octyloxy-5,5'-di-tert.-butyl-oxanilid, 2,2'-Di-dodecyloxy-5,5'di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o- und p-Methoxy- sowie von o- und p-Ethoxy-di-substituierten Oxaniliden.

2.7. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxy- phenyl)-4,6-bis(4-methylphenyl) -1,3,5-triazin, 2-(2-Hydroxy4-dodecyloxyphenyl)-4,6-bis(2,4-dimethylphenyl)-1,3,5-triazin.

Je nach Verwendungszweck können in die erfindungsgemässen Zusammensetzungen ausserdem noch weitere übliche Zusätze eingearbeitet werden, wie z.B.

3. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butyl- phenoxy)-2,4,8,10-tetraoxa-3,9-diphosphaspiro[5.5]undecan.

4. Peroxidzerstörende Verbindunqen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyldithiocarbamat, Dioctadecyldisulfid, Pentaerythrit-tetrakis-(ß-dodecylmercapto)-propionat.

5. Basische Co-Stabilisatoren, wie z.B. Melamin, Polyvinylpyrrolidon, Dicyandiamid, Triallylcyanurat, HarnstoffDerivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

6. Füllstoffe und Verstärkunqsmittel, wie z.B. Calciumcarbonat, Silikate, Glasfasern, Asbest, Talk, Kaolin, Glimmer, Bariumsulfat, Metalloxide und -hydroxide, Russ, Graphit.

### 7. Sonstiqe Zusätze, wie z.B. Weichmacher, Gleitmittel, Emulgatoren, Pigmente, Optische Aufheller, Flammschutzmittel, Antistatika, Treibmittel.

Weitere Costabilisatoren sind Epoxidverbindungen (wie z.B epoxidiertes Sojabohnenöl), 1,3-Diketone, organische oder anorganische Calciumverbindungen, Aminocrotonsäureester, Dehydracetsäure und Pyrrolderivate, insbesondere solche, die in der EP-A 22 087 und der GB-A 2 078 761 beschrieben sind, z.B. der dort angegebenen Formel I, vorzugsweise jene Pyrrolderivate, die in den Ansprüchen 2-9 der EP-A 22 087 definiert sind. Als Beispiel sei 2-Methyl-3-cyclohexyloxycarbonyl-4-phenyl-1 H-pyrrol genannt.

Andere Stabilisatoren, die in den erfindungsgemässen Zusammensetzungen angewendet werden können, sind Polyole. Typische Beispiele von Polyolen sind Pentaerythritol, Dipentaerythritol, Trimethylolpropan, Ditrimethylolpropan, Tris-(2-hydroxyethyl)isocyanurat (THEIC), wobei letzteres bevorzugt ist, Sorbitol, Mannitol und Inositol.

Als weitere Costabilisatoren seien 1,4-Dihydropyridin-2,5-dicarbonsäuren genannt, wie sie z.B. in der US-A 4,214,088 beschrieben sind, sowie Hydrotalcite, z.B. solche der Formel 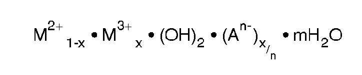 wobei
M²+ Mg, Ca, Sr, Ba, Zn, Cd, Pb, Sn und/oder Ni ist,
M³+ = Al, B oder Bi ist,
Aₙ ein Anion mit der Valenz n darstellt,
n eine Zahl von 1-4 ist,
x eine Zahl von 0-0,5 ist
m eine Zahl von 0-2 ist und
A OH-, CI-, Br-, I⁻, ClO₄⁻, HC03-, CH₃COO-, C₆H₅COO⁻, CO₃²⁻, S0₄²⁻ 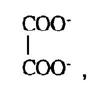
(CHOHCOO)₂²⁻, (CHOH)₄CH₂OHCOO⁻, C₂H₄(COO)₂²⁻, (CH₂COO)₂²⁻, CH₃CHOHCOO⁻, SiO₃²⁻, SiO₄⁴⁻, Fe (CN)₆³⁻, Fe(CN)₆⁴⁻ oder HPO₄²⁻ darstellt.

Andere Hydrotalcite, die eingesetzt werden können, sind Verbindungen mit der allgemeinen Formel la 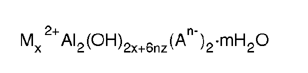 worin M²⁺ wenigstens ein Metall aus der Reihe von Mg und Zn darstellt und Mg bevorzugt ist, Aⁿ⁻ ein Anion, beispielsweise aus der Reihe von CO₃²⁻, 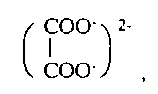 OH- und _{S}2-,
darstellt, wobei n die Valenz des Anions ist, m eine positive Zahl, vorzugsweise von 0,5 bis 5, darstellt und x und z positive Zahlen darstellen, wobei x vorzugsweise 2 bis 6 ist und z kleiner als 2 ist.

Ebenfalls als zusätzliche Stabilisatoren können Metallcarboxylate und -phenolate von Metallen der zweiten Haupt-und Nebengruppe des Periodensystems, oder auch anorganische Salze von Metallen der zweiten Nebengruppe des Periodensystems, wie z.B. ZnCl₂, eingesetzt werden.

Beispiele von Metallcarboxylaten sind die Metallsalze von gesättigten, ungesättigten oder mit Hydroxylgruppen substituierten aliphatischen Carbonsäuren mit 6 bis 20 C-Atomen, wie Hexansäure, Heptansäure, Octansäure, 2-Ethylhexansäure, Undecylsäure, Laurinsäure, Myristinsäure, Palmitinsäure, Stearinsäure, 12-Oxystearinsäure, Oelsäure, Linolsäure oder Ricinolsäure. Ebenfalls von Interesse sind die Metallsalze von aromatischen Carbonsäuren wie beispielsweise substituierte Phenylbenzoate. Bevorzugt sind Metalle aus der Reihe Ba, Sr, Ca, Mg, Zn und Cd. Bevorzugte Metallcarboxylate sind beispielsweise Ca- oder Zn-Stearat und Zn- und Ca-Oleat.

Als Metallphenolate kommen insbesondere die Metallsalze von Phenolen mit 6-20 C-Atomen in Frage, beispielsweise Alkylphenolen wie p-tert.-Butyl-, p-Octyl-, p-Nonyl- oder p-Dodecylphenol. Beispiele hierfür sind Ba-p-tert Butylbenzoat oder Ba-p-n-Nonylphenolat.

Das erfindungsgemässe lösungsmittelfreie Verfahren weist beispielsweise die Vorteile auf, dass eine Abtrennung, Entsorgung und Wiederaufbereitung von Lösungsmitteln entfällt.

Die nachfolgenden Beispiele illustrieren das erfindungsgemässe Verfahren weiter. Alle Angaben in Teilen oder Prozenten beziehen sich auf das Gewicht, soweit nicht anders angegeben.

Beispiel 1: 14,9 kg gefällte Kieselsäure (Ultrasil VN3) wird in einen Taumeltrockner angefüllt und 20,14 kg (flüssige) ß-Mercaptopropionsäure in den in Betrieb genommenen Taumeltrockner langsam derart zudosiert, dass das Gemisch rieselfähig bleibt Anschliessend werden 72,05 kg Dioctylzinnoxid zugegeben und an den Schaufeltrockner ein Vakuum von 30 mbar angelegt. Die Mischung wird dann unter ständiger Bewegung im Taumeltrockner während 1 h auf 70°C erhitzt. Das fertige Produkt ist ein rieselfähiges, farbloses Pulver.

Beispiel 2: 10 kg gefällte Kieselsäure (Ultrasil VN3) und 5,84 kg Maleinsäure werden in einem mit Schikanen versehenen Rundkolben eines Rotationsverdampfers vorgelegt. Unter Rotation des Kolbens werden 16,16 kg ß-Mercaptopropionsäure so langsam zugegeben, dass die Reaktionsmischung rieselfähig bleibt. Anschliessend werden 75,56 kg Dioctylzinnoxid (96 %ig) zugegeben und ein Vakuum von 25 mbarangelegt. Die Mischung wird unter ständiger Rotation 45 Minuten lang auf 60°C erhitzt. Es wird dann als Endprodukt ein rieselfähiges, weisses Pulver erhalten.

Beispiel 3: 5 kg gefällte Kieselsäure (Ultrasil VN3), 4,88 kg Maleinsäure, 62,97 kg Dioctylzinnoxid (95 %ig) und 20 kg Triethylenglycol-bis-3-(3-tert.-butyl-4-hydroxy-5-methylphenyl)-propionat werden in einem mit Schikanen versehenen Rundkolben eines Rotationsverdampfers durch Drehen vermengt und 10 Minuten bei 25°C gehalten. Danach dosiert man konstant während 20 Minuten 13,47 kg ß-Mercaptopropionsäure zu. Nach weiteren 20 Minuten wird die Mischung unter Anlegung eines Vakuums von 25 mbar 60 Minuten auf 50°C erhitzt. Als Endprodukt erhält man ein weisses, rieselfähiges Pulver.

Beispiel 4: Wiederholt man Beispiel 1, setzt jedoch an Stelle von β-Mercaptopropionsäure die äquivalente Menge an Maleinsäure ein, so erhält man ebenfalls einen Organozinnstabilisator als ein weisses, rieselfähiges Pulver.

Beispiel 5: Wiederholt man Beispiel 1, setzt jedoch an Stelle von β-Mercaptopropionsäure die äquivalente Menge an Thioglykolsäure ein, so erhält man ebenfalls einen Organozinnstabilisator als ein weisses, rieselfähiges Pulver.

Beispiel 6: Wiederholt man Beispiel 1, setzt jedoch an Stelle von β-Mercaptopropionsäure die äquivalente Menge an Thiosalicylsäure ein, so erhält man ebenfalls einen Organozinnstabilisator als ein weisses, rieselfähiges Pulver

Beispiel 7: Es wird eine Mischung aus 100 Gew.-Teilen eines Emulsions-PVC mit einem K-Wert von 78, 3 Gew.-Teilen Montanwachs und 0,5 Teilen Stabilisator nach Beispiel 1 auf einem Mischwalzwerk 10 Minuten bei 180°C gewalzt. Vom gebildeten 0,3 mm dicken Walzfell werden Folienmuster in einem Trockenschrank bei 200°C thermisch belastet Der Yellowness Index (YI) der Proben wird in regelmässigen Zeitabständen nach ASTM D 1925 bestimmt. Die Ergebnisse sind in der Tabelle 1 aufgeführt.

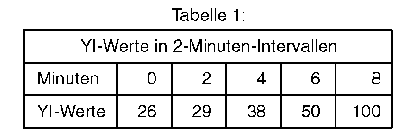

## Patentansprüche

1. Lösungsmittelfreies Verfahren zur Herstellung eines pulverförmigen Stabilisatorgemisches enthaltend Zinnstabilisatoren und Adsorbentien, dadurch gekennzeichnet, dass wenigstens eine Carbonsäure oder ein Carbonsäureanhydrid, wenigstens ein Organozinnoxid und wenigstens ein Adsorbens vermischt und erhitzt werden, wobei die erhaltenen Zinnstabilisatoren Reaktionsprodukte von Carbonsäure beziehungsweise Carbonsäureanhydrid und Organozinnoxid sind.

2. Verfahren nach Anspruch 1, dadurch gekennzeichnet, dass als Carbonsäurekomponente Verbindungen der Formell 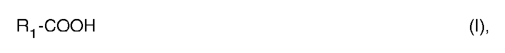 worin R₁ -H, Alkyl mit 1 bis 18 C-Atomen, Alkenyl mit 2 bis 18 C-Atomen, einen Rest -COOH, -R₂-COOH, wobei R₂-CH=CH-, Alkylen mit 1 bis 4 C-Atomen, Phenylen oder mit C₁-C₄-Alkyl substituiertes Phenylen, oder -CH₂-CH (OH)- ist, oder R₁ einen Rest -CH(XH)-CH₃, wobei X 0 oder S ist, darstellt, oder R₁ einen Rest -CR₃R₄-(CR₅R₆)ₙ-SH, wobei R₃, R₄, Rₛ und R₆ unabhängig voneinander -H oder Alkyl mit 1 bis 6 C-Atomen und n 0 oder 1 ist, darstellt, oder R₁ einen Rest 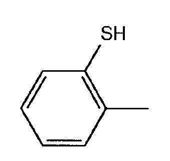 darstellt, oder R₁ Phenyl oder durch C₁-C₆-Alkyl oder/und OH substituiertes Phenyl oder Phenyl-C₁-C₄-alkyl oder im Phenylteil durch C₁-C₆-Alkyl oder/und OH substituiertes Phenyl-C₁-C₄-alkyl darstellt, oder deren Anhydride eingesetzt werden.

3. Verfahren nach Anspruch 1, dadurch gekennzeichnet, dass als Carbonsäurekomponente Verbindungen der Formel I, worin R₁ Alkyl mit 12 bis 18 C-Atomen darstellt oder worin R₁ einen Rest -COOH, -R₂-COOH, wobei R₂-CH=CH-, Alkylen mit 1 bis 4 C-Atomen, -CH₂,CH(OH)- ist. darstellt, oder worin R₁ einen Rest -CH(SH)-CH₃ oder -CH(OH)-CH₃ darstellt, oder R₁ einen Rest -CH₂-SH oder -CH₂-CH₂-SH darstellt oder R₁ einen Rest 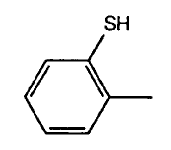 darstellt, oder deren Anhydride, oder Mischungen solcher Säuren oder/und Anhydride eingesetzt werden.

4. Verfahren nach Anspruch 1, dadurch gekennzeichnet, dass als Carbonsäure oder Anhydrid Thioglykolsäure, 3-Mercaptopropionsäure, Thiosalicylsäure, Maleinsäure, Maleinsäureanhydrid oder Mischungen davon eingesetzt wird.

5. Verfahren nach Anspruch 1, dadurch gekennzeichnet, dass als Organozinnoxid eine Verbindung der Formel II 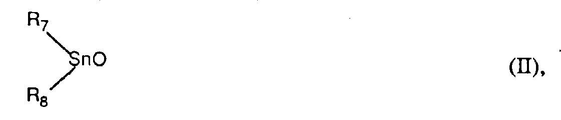 worin R₇ und R₈, unabhängig voneinander, Cᵢ-C₂ₒ-Alkyl, C₆-C₂₀-Alkoxycarbonylalkyl, C₇-C₉-Phenylalkyl, Phenyl oder C₁-C₄-Alkyl substituiertes Phenyl darstellt, eingesetzt wird.

6. Verfahren nach Anspruch 5, dadurch gekennzeichnet, dass als Organozinnoxid eine Verbindung der Formel II, worin R₇ und R_{B} Alkyl mit 1 bis 18 C-Atomen darstellt, eingesetzt wird.

7. Verfahren nach Anspruch 5, dadurch gekennzeichnet, dass als Organozinnoxid eine Verbindung der Formel II, worin R₇ und R_{B} gleich sind und Alkyl mit 4 bis 12 C-Atomen darstellen, eingesetzt wird.

8. Verfahren nach Anspruch 1, dadurch gekennzeichnet, dass als Adsorbens wenigstens eine Substanz aus der Reihe der Kieselsäuren, des Kieselgurs, der Silikate, der Bleicherden, der aktivierten Aluminiumoxide und der teilchenförmigen organischen Polymere eingesetzt wird

9. Verfahren nach Anspruch 8, dadurch gekennzeichnet, dass das Adsorbens Alkali- oder Erdalkalioxide oder Oxide der Metalle Al, Ti, Zr, Fe, Co oder Ni oder Gemische der Oxide enthält

10. Verfahren nach Anspruch 1, dadurch gekennzeichnet, dass die Carbonsäure oder das Carbonsäureanhydrid und das Organozinnoxid in dem Masse mit dem Adsorbens vermischt werden, dass das Gemisch immer rieselfähig bleibt.

11. Verfahren nach Anspruch 1, dadurch gekennzeichnet, dass die Carbonsäure oder das Carbonsäureanhydrid, das Organozinnoxid und das Adsorbens bei Normaldruck auf Temperaturen bis zu 120°C oder im Vakuum bis zu 100°C erhitzt werden.

12. Verfahren nach Anspruch 1, dadurch gekennzeichnet, dass die Carbonsäure oder das Carbonsäureanhydrid, bezogen auf die Organozinnverbindung, in 0,95facher bis 1,05-facher äquivalenter Menge angewendet wird

13. Verfahren nach Anspruch 1, dadurch gekennzeichnet, dass der Anteil des Adsorbens im Stabilisatorgemisch 5 bis 95 Gew.-% beträgt.

14. Verfahren nach Anspruch 1, dadurch gekennzeichnet, dass man zusätzlich einen weiteren Stabilisator, insbesondere ein phenolisches Antioxidans, zusetzt.

## Claims

1. A solventless process for the preparation of a powder-form stabiliser mixture comprising tin stabilisers and adsorbents, which process comprises mixing and heating at least one carboxylic acid or carboxylic anhydride, at least one organotin oxide and at least one adsorbent, the tin stabilisers obtained being reaction products of carboxylic acid or anhydride and organotin oxide.

2. A process according to claim 1, wherein the carboxylic acid component used comprises compounds of formula I 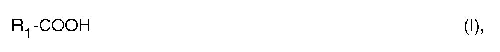 in which R₁ is -H, alkyl of 1 to 18 carbon atoms, alkenyl of 2 to 18 carbon atoms, a -COOH or -R₂-COOH radical, where R₂ is -CH=CH-, alkylene of 1 to 4 carbon atoms, phenylene or phenylene which is substituted by C₁-C₄alkyl, or is -CH₂-CH(OH)-, or R₁ is a -CH(XH)-CH₃ radical, where X = O or S, or R₁ is a -CR₃R₄-(CR₅R₆)ₙ-SH radical, where R₃, R₄, R₅ and R₆ are each independently of one another -H or alkyl of 1 to 6 carbon atoms, and n is 0 or 1, or R₁ is a radical 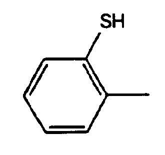 or R₁ is phenyl or phenyl which is substituted by C₁-C₆alkyl and/or OH, or is phenyl-C₁-C₄alkyl or phenyl-C₁-C₄alkyl which is substituted in the phenyl moiety by C₁-C₆alkyl and/or OH, or anhydrides thereof.

3. A process according to claim 1, wherein the carboxylic acid component used comprises compounds of formula I, in which R₁ is alkyl of 12 to 18 carbon atoms or in which R₁ is a -COOH or -R₂-COOH radical, where R₂ is -CH=CH-, alkylene of 1 to 4 carbon atoms or -CH₂-CH(OH)-, or where R₁ is a -CH(SH)-CH₃ or -CH(OH)-CH₃ radical, or R₁ is a -CH₂-SH or -CH₂-CH₂-SH radical, or R₁ is a radical 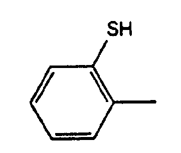 or anhydrides thereof, or mixtures of such acids and/or anhydrides.

4. A process according to claim 1, wherein the carboxylic acid or anhydride used is thioglycolic acid, 3-mercaptopropionic acid, thiosalicylic acid, maleic acid, maleic anhydride or mixtures thereof.

5. A process according to claim 1, wherein the organotin oxide used is a compound of formula II 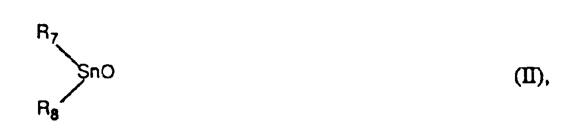 in which R₇ and R₈ are each independently of the other C₁-C₂ₒalkyl, C₆-C₂₀alkoxycarbonylalkyl, C₇-C₉phenylalkyl, phenyl or C₁-C₄alkyl-substituted phenyl.

6. A process according to claim 5, wherein the organotin oxide used is a compound of formula II in which R₇ and R₈ are alkyl of 1 to 18 carbon atoms.

7. A process according to claim 5, wherein the organotin oxide used is a compound of formula II in which R₇ and R₈ are identical and are alkyl of 4 to 12 carbon atoms.

8. A process according to claim 1, wherein the adsorbent used is at least one substance from the series of silicic acids, kieselguhr, silicates, bleaching earths, activated aluminas and the particulate organic polymers.

9. A process according to claim 8, wherein the adsorbent comprises alkali metal oxides or alkaline earth metal oxides or oxides of the metals Al, Ti, Zr, Fe, Co or Ni or mixtures of the oxides.

10. A process according to claim 1, wherein the carboxylic acid or carboxylic anhydride and the organotin oxide are mixed with the adsorbent such that the mixture always remains free-flowing.

11. A process according to claim 1, wherein the carboxylic acid or carboxylic anhydride, the organotin oxide and the adsorbent are heated under normal pressure to temperatures of up to 120°C or under vacuum to temperatures of up to 100°C.

12. A process according to claim 1, wherein the carboxylic acid or carboxylic anhydride is used in from 0.95 to 1.05 times the equivalent amount, based on the organotin compound.

13. A process according to claim 1, wherein the proportion of the adsorbent in the stabiliser mixture is 5 to 95% by weight.

14. A process according to claim 1, wherein additionally a further stabiliser, especially a phenolic antioxidant, is added.

## Revendications

1. Procédé sans solvant pou r la préparation d'un mélange stabilisant sous forme de poudre contenant des stabilisants à base d'étain et des adsorbants, caractérisé en ce que l'on mélange et l'on chauffe au moins un acide carboxylique ou un anhydride carboxylique, au moins un oxyde organostannique et au moins un adsorbant, dans lequel les stabilisants à base d'étain obtenus sont des produits de réaction d'acide carboxylique respectivement d'anhydride carboxylique, et d'oxyde organostannique.

2. Procédé selon la revendication 1, caractérisé en ce que l'on utilise comme composant acide carboxylique des composés de formule 1 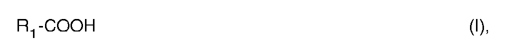 dans laquelle R₁ représente -H, un groupe alkyle avec 1 à 18 atomes de carbone, alkényle avec 2 à 18 atomes de carbone, un radical -COOH, -R₂-COOH, formules dans lesquelles R₂ est -CH=CH-, un groupe alkylène avec 1 à 4 atomes de carbone, phénylène ou phénylène substitué avec un radical alkyle en C₁-C₄, ou -CH₂₋CH(OH)-, ou R₁ représente un radical -CH(XH)-CH₃, dans lequel X est O ou S, ou R₁ représente un radical -CR₃R₄-(CR₅R₆)ₙ-SH, dans lequel R₃, R₄, R₅ et R₆ représentent indépendamment les uns des autres -H ou un groupe alkyle avec 1 à 6 atomes de carbone et n est 0 ou 1, ou R₁ représente un radical 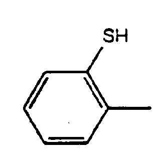 ou R₁ représente un groupe phényle ou phényle substitué par un groupe alkyle en C₁-C₆ et/ou OH ou un groupe phényl-(alkyle en C₁-C₄) ou phényl-(alkyle en C₁-C₄) substitué dans la partie phényle par un groupe alkyle en C₁-C₆ et/ou OH, ou des anhydrides de ceux-ci.

3. Procédé selon la revendication 1, caractérisé en ce que l'on utilise comme composant acide carboxylique des composés de formule I dans laquelle R₁ représente un groupe alkyle avec 1 à 18 atomes de carbone, ou dans laquelle R₁ représente un radical -COOH, -R₂₋COOH, formule dans laquelle R₂ est -CH=CH-, un groupe alkylène avec 1 à 4 atomes de carbone, -CH₂-CH(OH)-, ou dans laquelle R₁ représente un radical -CH(SH)-CH₃ ou -CH (OH)-CH₃, ou R₁ représente un radical -CH₂-SH ou -CH₂-CH₂-SH ou R₁ représente un radical 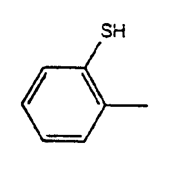 ou des anhydrides de ceux-ci, ou des mélanges de tels acides et/ou anhydrides.

4. Procédé selon la revendication 1, caractérisé en ce que l'on utilise comme acide carboxylique ou anhydride l'acide thioglycolique, l'acide 3-mercaptopropionique, l'acide thiosalicilique, l'acide maléique, l'anhydride maléique ou des mélanges de ceux-ci.

5. Procédé selon la revendication 1, caractérisé en ce que l'on utilise comme oxyde organostannique un composé de formule Il 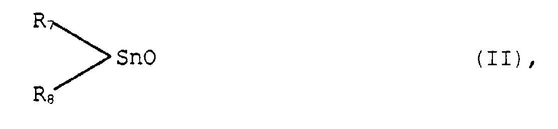 dans laquelle R₇ et R_{B} représentent, indépendamment l'un de l'autre, un groupe alkyle en C₁-C₂₀, alkoxycarbo- nylalkyle en C₆-C₂₀, phénylalkyle en C₇-C₉, phényle ou phényle substitué par un groupe alkyle en C₁-C₄.

6. Procédé selon la revendication 5, caractérisé en ce que l'on utilise comme oxyde organostannique un composé de formule II, dans laquelle R₇ et R₈ représentent un groupe alkyle avec 1 à 18 atomes de carbone.

7. Procédé selon la revendication 5, caractérisé en ce que l'on utilise comme oxyde organostannique un composé de formule II, dans laquelle R₇ et Rₛ sont identiques et représentent un groupe alkyle avec 4 à 12 atomes de carbone.

8. Procédé selon la revendication 1, caractérisé en ce que l'on utilise comme adsorbant au moins une substance choisie parmi les acides siliciques, la diatomite, les silicates, les argiles à smectite, les oxydes d'aluminium activés et les polymères organiques en forme de particules.

9. Procédé selon la revendication 8, caractérisé en ce que l'adsorbant contient des oxydes de métaux alcalins ou alcalino-terreux ou des oxydes des métaux Al, Ti, Zr, Fe, Co ou Ni ou des mélanges des oxydes.

10. Procédé selon la revendication 1, caractérisé en ce que l'acide carboxylique ou l'anhydride carboxylique et l'oxyde organostannique sont mélangés dans la masse avec l'adsorbant, de manière à ce que le mélange reste toujours apte à l'écoulement.

11. Procédé selon la revendication 1, caractérisé en ce que l'acide carboxylique ou l'anhydride carboxylique, l'oxyde organostannique et l'adsorbant sont chauffés sous pression normale à des températures jusqu'à 120°C ou sous vide jusqu'à 100°C.

12. Procédé selon la revendication 1, caractérisé en ce que l'acide carboxylique ou l'anhydride carboxylique, par rapport au composé organostannique, est utilisé en quantité 0,95 fois à 1,05 fois équivalente.

13. Procédé selon la revendication 1, caractérisé en ce que la concentration de l'adsorbant dans le mélange du stabilisant est de 5 à 95% en poids.

14. Procédé selon la revendication 1, caractérisé en ce que l'on ajoute en supplément un autre stabilisant, en particulier un anti-oxydant phénolique.
